# EUROPÄISCHE PATENTSCHRIFT

(11) **EP 1 298 379 B1**
(45) Veröffentlichungstag und Bekanntmachung des Hinweises auf die Patenterteilung: **26.01.2005**
(21) Anmeldenummer: 02015157.7
(22) Anmeldetag: 06.07.2002
(51) Int. Cl.: F16L 55/04, F16L 55/05, F02M 55/04, F02M 37/00

(54) **Vorrichtung zum Dämpfen von Druckpulsationen in einem Fluidsystem, insbesondere in einem Kraftstoffsystem einer Brennkraftmaschine, sowie Kraftstoffsystem**
Device for damping pressure pulses in a fluid system, particularly in a fuel system of a combustion engine, and fuel system
Dispositif pour amortir les pulsations de pression dans un système à fluide, en particulier dans un système à carburant d'un moteur à combustion, et système à carburant

(30) Priorität: 28.09.2001 DE 10148220
(43) Veröffentlichungstag der Anmeldung: 02.04.2003
(73) Patentinhaber: ROBERT BOSCH GMBH, 70442 Stuttgart (DE)
(72) Erfinder: Rembold, Helmut, 70435 Stuttgart (DE)

(56) Entgegenhaltungen:
- EP-A- 0 633 400
- EP-A- 0 679 832
- EP-A- 1 099 849
- DE-A- 19 539 885
- US-A- 5 934 251

## Beschreibung

### Stand der Technik

Die Erfindung betrifft zunächst eine Vorrichtung zum Dämpfen von Druckpulsationen in einem Fluidsystem, insbesondere in einem Kraftstoffsystem einer Brennkraftmaschine, mit einem Gehäuse mit einem ersten Arbeitsraum, welcher mit dem Fluidsystem verbunden ist und bereichsweise von mindestens einem ersten beweglichen Wandelement begrenzt wird, mit einem zweiten Arbeitsraum, welcher über mindestens eine Drosseleinrichtung mit dem Fluidsystem verbunden ist und von einem zweiten beweglichen Wandelement begrenzt wird, und mit einer ersten Federeinrichtung, welche zwischen den beiden Wandelementen angeordnet und mit beiden Wandelementen wirkverbunden ist.

In der DE 195 39 885 Al ist eine Kraftstoffversorgungsanlage beschrieben, bei der eine erste Kraftstoffpumpe den Kraftstoff aus einem Kraftstoff-Vorratsbehälter über eine Kraftstoffverbindung zu einer zweiten Kraftstoffpumpe fördert. Die zweite Kraftstoffpumpe ihrerseits fördert den Kraftstoff über eine Druckleitung zu mehreren Kraftstoffventilen. Die Anzahl der Kraftstoffventile ist gleich der Anzahl der Zylinder der Brennkraftmaschine. Dabei ist die Kraftstoffversorgungsanlage so gebaut, dass die Kraftstoffventile den Kraftstoff direkt in die Brennräume der Brennkraftmaschine spritzen.

In der Kraftstoff verbindung zwischen der ersten und der zweiten Kraftstoffpumpe ist ein Druckdämpfer vorhanden. Dieser besteht aus einem Gehäuse, in dem ein Kolben geführt ist, welcher einerseits einen Arbeitsraum begrenzt und andererseits von einer ersten und einzigen Druckfeder beaufschlagt wird. Durch einen solchen Druckdämpfer können Druckpulsationen geglättet werden, welche in der Kraftstoffverbindung auftreten. Die Ursache derartiger Druckpulsationen kann in der Art der Förderung der ersten Kraftstoffpumpe liegen, beispielsweise wenn es sich bei der ersten Kraftstoffpumpe um eine Kolbenpumpe handelt. Aber auch die Verwendung eines Mengensteuerventils bei der zweiten Kraftstoffpumpe, durch welche der Arbeitsraum der zweiten Kraftstoffpumpe während eines Fördertaktes mit der Kraftstoffverbindung verbunden werden kann, kann zu derartigen Druckpulsationen führen. Das Glätten dieser Druckpulsationen verlängert die Lebensdauer der in der Kraftstoff-Versorgungsanlage eingesetzten Komponenten und gewährleistet die Füllung des Pumpenförderraums im gesamten Betriebsbereich.

Bei der bekannten Kraftstoff-Versorgungsanlage ist der Druck in der Kraftstoffverbindung zwischen der ersten und der zweiten Kraftstoffpumpe im Wesentlichen konstant. Er beträgt ungefähr 4 bis 6 bar. Bei neueren Kraftstoff-Versorgungsanlagen kann der Druck in der Kraftstoffverbindung jedoch dem Bedarf entsprechend variiert werden. Es wurde nun festgestellt, dass der bekannte Druckdämpfer in solchen Kraftstoff-Versorgungsanlagen auftretende Druckpulsationen nicht immer optimal glättet. Die Gründe hierfür sind u.a., dass bei einer Erhöhung des statischen Drucks der Kolben soweit verschoben wird, dass für die Dämpfung von Druckpulsationen kein ausreichender Kolbenhub mehr zur Verfügung steht. Eine entsprechend steife Druckfeder führt wiederum zu einer sehr hohen Toleranzempfindlichkeit aufgrund der großen Druckänderungen über dem Hub des Kolbens.

Die EP 0 633 400 A beschreibt einen adaptiven hydropneumatischen Druckdämpfer mit zwei Arbeitsräumen, die jeweils von einer Membran begrenzt werden. Zwischen den beiden Membranen ist eine Luftfeder gespannt. Der eine Arbeitsraum ist direkt, der andere über eine Drossel mit einem Fluidsystem verbunden.

Bei dieser Vorrichtung werden beide Wandelemente mit dem statischen Fluiddruck beaufschlagt. Aufgrund der vorhandenen Drosseleinrichtung wird jedoch nur das erste Wandelement mit dem dynamischen Druck, also den Druckpulsationen, beaufschlagt. Die Kompression der zwischen den beiden Wandelementen angeordneten Federeinrichtung setzt sich somit bei einer statischen Druckänderung aus der Bewegung des ersten und des zweiten Wandelements zusammen, wohingegen sie bei einer Druckpulsation sich nur aus der Bewegung des ersten Wandelementes ergibt. Dies bedeutet jedoch nichts anderes, als dass sich bei einer bestimmten statischen Druckänderung das erste Wandelement um einen kleineren Weg bewegt als bei einer entsprechenden dynamischen Druckänderung.

Eine Kennlinie des ersten Wandelements, welche dessen Hub mit dem Druck im ersten Arbeitsraum verknüpft, ist also bei einer statischen Druckänderung erheblich steiler als bei einer dynamischen Druckänderung. Eine relativ flache Kennlinie ist jedoch erforderlich, um Druckpulsationen gut glätten zu können, und eine steile Kennlinie stellt sicher, dass bei einer statischen Druckänderung der mögliche Hub des ersten Wandelements nicht soweit "verbraucht" wird, dass er für dynamische Druckänderungen nicht mehr in ausreichendem Umfange zur Verfügung steht.

Aus der US 5, 934, 251 ist ebenfalls ein Druckdämpfer mit zwei Arbeitsräumen bekannt, die jeweils von einer Membran begrenzt werden. Zwischen den beiden Membranen ist eine erste Schraubenfeder gespannt. Eine Membran wird durch eine zweite Schraubenfeder gegen einen zwischen den beiden Membranen liegenden Anschlag beaufschlagt.

Aufgabe der vorliegenden Erfindung ist es daher, eine Vorrichtung der eingangs genannten Art so weiterzubilden, dass sie Druckpulsationen in einem Fluidsystem bei unterschiedlichen Druckniveaus zuverlässig und gut glätten kann.

Diese Aufgabe wird bei einer Vorrichtung der eingangs genannten Art dadurch gelöst, dass sie eine Halteeinrichtung umfasst mit mindestens einer zweiten Federeinrichtung, welche einerseits mit einem beweglichen Wandelement und andererseits mit dem Gehäuse wirkverbunden ist, und mit mindestens einem im zweiten Arbeitsraum gelegenen Anschlag, gegen den das zweite Wandelement von mindestens einer der Federeinrichtungen beaufschlagt wird, wobei die Federkonstanten der beiden Federeinrichtungen und die Flächenverhältnisse der beiden Wandelemente so ausgelegt sind, dass bei einer statischen Druckänderung sich zunächst nur das erste Wandelement bewegt.

### Vorteile der Erfindung

Die bei der erfindungsgemäßen Vorrichtung vorgesehene Halteeinrichtung hat im Wesentlichen zwei Wirkungen: Zum einen wird die Ausgangslage eindeutig definiert und ist beispielsweise von Vibrationen, welche auf die Vorrichtung einwirken, unabhängig. Wird das zweite Wandelement von einer Federeinrichtung gegen einen Anschlag gedrückt, bedeutet dies zum anderen bei entsprechender Auslegung der Federkonstanten der Federeinrichtungen und der Flächenverhältnisse der beiden Wandelemente, dass bei einer statischen Druckänderung sich zunächst nur das erste Wandelement bewegt. Erst nach Erreichen eines bestimmten Druckes hebt das zweite Wandelement von seinem Anschlag ab. Die entsprechende Druck-Weg-Kennlinie beginnt also zunächst flach und wird dann steiler. Somit werden dynamische aber auch statische Druckänderungen bei geringem Systemdruck verstärkt aufgefangen. Erst bei höherem Systemdruck wird durch eine steilere Kennlinie sichergestellt, dass der Hub des Druckdämpfers nicht unnötig aufgebraucht wird.

Vorteilhafte Weiterbildungen der Erfindung sind in Unteransprüchen angegeben.

Zunächst wird vorgeschlagen, dass die Halteeinrichtung mindestens einen Anschlag umfasst, gegen den das erste Wandelement von mindestens einer der Federeinrichtungen beaufschlagt wird. Bei entsprechender Auslegung der Flächenverhältnisse und der Federkonstanten kann hierdurch erreicht werden, dass sich das erste Wandelement überhaupt erst nach Erreichen eines Mindestdruckes in der ersten Arbeitskammer bewegt. Dies hat den Vorteil, dass bei sehr geringen Drücken, welche üblicherweise nicht den Arbeitsdrücken des Fluidsystems entsprechen, nicht unnötig Hub "aufgebraucht wird".

In einer weiteren, bevorzugten Ausgestaltung der erfindungsgemäßen Vorrichtung wird vorgeschlagen, dass ein Anschlag vorhanden ist, welcher den Weg des zweiten Wandelements in Richtung zum ersten Wandelement hin begrenzt. Hierdurch wird erreicht, dass die Kennlinie nach einem bestimmten Hub mit steiferer Charakteristik in einen Bereich mit einer weicheren Charakteristik abknickt.

Bei einer anderen Weiterbildung heißt es, dass der zwischen den beiden Wandelementen liegende Bereich insbesondere über eine Diffusionssperre flüssigkeitsdicht abgeschlossen oder an eine Leckageleitung, in der eine Drossel angeordnet ist, angeschlossen ist. Auf diese Weise wird verhindert, dass es dann, wenn eine Undichtigkeit zwischen einem der beweglichen Wandelemente und dem Gehäuse auftritt, zu einem Kraftstoffaustritt kommt. Die Sicherheit bei der Benutzung der erfindungsgemäßen Vorrichtung wird hierdurch erhöht.

Die Erfindung betrifft auch ein Kraftstoffsystem mit einer Kraftstoffpumpe, welche den Kraftstoff zu einem Druckbereich hin fördert, aus dem der Kraftstoff zu mindestens einer Kraftstoff-Einspritzvorrichtung gelangt, mit einer Einrichtung, durch welche der Druck im Druckbereich verändert werden kann, und mit einer wie zuvor beschriebenen Vorrichtung zum Dämpfen von Druckpulsationen in dem Druckbereich.

### Zeichnung

Nachfolgend werden besonders bevorzugte Ausführungsbeispiele der vorliegenden Erfindung unter Bezugnahme auf die beiliegende Zeichnung im Detail erläutert. In der Zeichnung zeigen:
- Figur 1: eine Prinzipdarstellung eines Kraftstoffsystems einer Brennkraftmaschine mit Benzin-Direkteinspritzung, wobei das Kraftstoffsystem eine Vorrichtung zum Dämpfen von Druckpulsationen umfasst;
- Figur 2: eine teilweise geschnittene Darstellung einer nicht erfindungsgemäßen Vorrichtung zum Dämpfen von Druckpulsationen von Figur 1, wobei die Vorrichtung zwei bewegliche Wandelemente umfasst;
- Figur 3: ein Diagramm, in dem der Hub eines der Wandelemente der Vorrichtung von Figur 2 über dem Druck dargestellt ist;
- Figur 4: eine Darstellung ähnlich Figur 2 eines ersten erfindungsgemäßen Ausführungsbeispiels einer Vorrichtung zum Dämpfen von Druckpulsationen;
- Figur 5: ein Diagramm, in dem der Hub eines der Wandelemente der Vorrichtung von Figur 4 über dem Druck dargestellt ist;
- Figur 6: eine Darstellung ähnlich Figur 2 eines zweiten erfindungsgemäßen Ausführungsbeispiels einer Vorrichtung zum Dämpfen von Druckpulsationen;
- Figur 7: ein Diagramm, in dem der Hub eines der Wandelemente der Vorrichtung von Figur 6 über dem Druck aufgetragen ist; und
- Figur 8: eine Ansicht ähnlich Figur 2 eines dritten erfindungsgemäßen Ausführungsbeispiels einer Vorrichtung zum Dämpfen von Druckpulsationen.

### Beschreibung der Ausführungsbeispiele

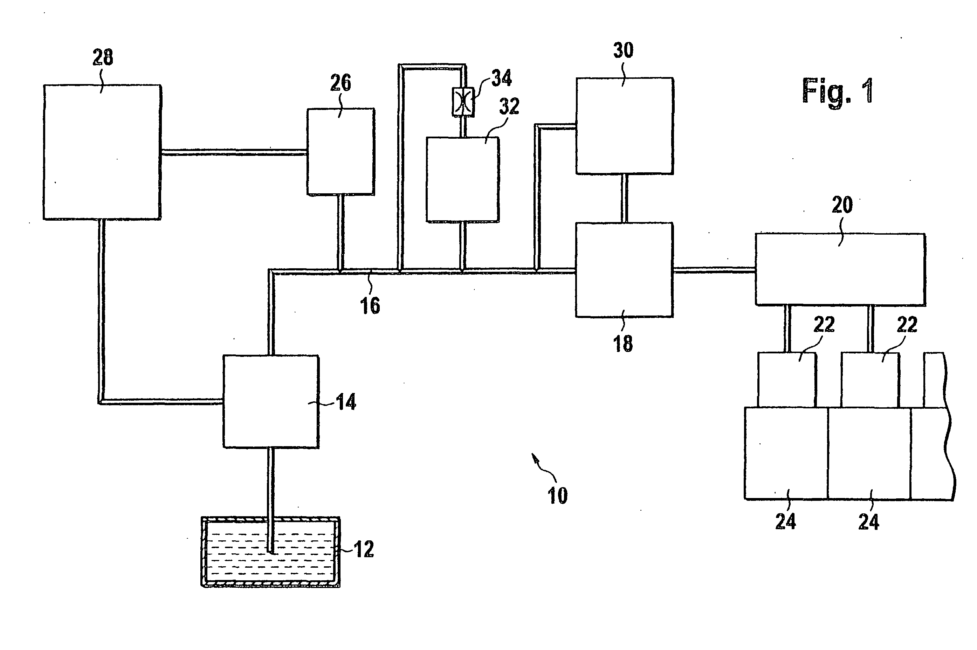

Ein Kraftstoffsystem einer Brennkraftmaschine trägt in Figur 1 insgesamt das Bezugszeichen 10. Es umfasst einen Kraftstoffbehälter 12, aus dem eine elektrisch angetriebene Kraftstoffpumpe 14 den Kraftstoff in eine Niederdruck-Kraftstoffleitung 16 fördert. An diese ist wiederum eine Hochdruck-Kraftstoffpumpe 18 angeschlossen, welche von der Brennkraftmaschine auf hier nicht näher dargestellte Art und Weise mechanisch angetrieben wird. Die Hochdruck-Kraftstoffpumpe 18 fördert in eine Kraftstoff-Sammelleitung 20 ("Rail"), in der der Kraftstoff unter hohem Druck gespeichert ist. An die Kraftstoff-Sammelleitung 20 sind mehrere Injektoren 22 angeschlossen, die den Kraftstoff direkt in Brennräume 24 einspritzen.

Der Druck des Kraftstoffes in der Niederdruck-Kraftstoffleitung 16 wird von einem Drucksensor 26 erfasst, der entsprechende Signale an ein Steuer- und Regelgerät 28 leitet. Dieses steuert wiederum die elektrische Kraftstoffpumpe 14 an. Abhängig von den Betriebsbedingungen der Brennkraftmaschine kann auf diese Weise ein variabler statischer Druck in der Niederdruck-Kraftstoffleitung 16 realisiert werden. Der Druck in der Niederdruck-Kraftstoffleitung 16 liegt dabei üblicherweise zwischen ungefähr 0,3 bar und 6 bar.

Aufgrund der Fördercharakteristik der elektrischen Kraftstoffpumpe 14 und der Betriebseigenschaften eines Mengensteuerventils 30, über das ein Arbeitsraum (nicht dargestellt) der Hochdruck-Kraftstoffpumpe 18 mit der Niederdruck-Kraftstoffleitung 16 verbunden und hierdurch die Fördermenge zur Kraftstoff-Sammelleitung 20 hin eingestellt werden kann, kommt es in der Niederdruck-Kraftstoffleitung 16 zu Druckpulsationen. Diese werden von einer Vorrichtung 32 gedämpft. Die Vorrichtung 32 wird auch als "Druckdämpfer" bezeichnet. Sie ist auf der einen Seite direkt und auf der anderen Seite über eine Strömungsdrossel 34 mit der Niederdruck-Kraftstoffleitung 16 verbunden.

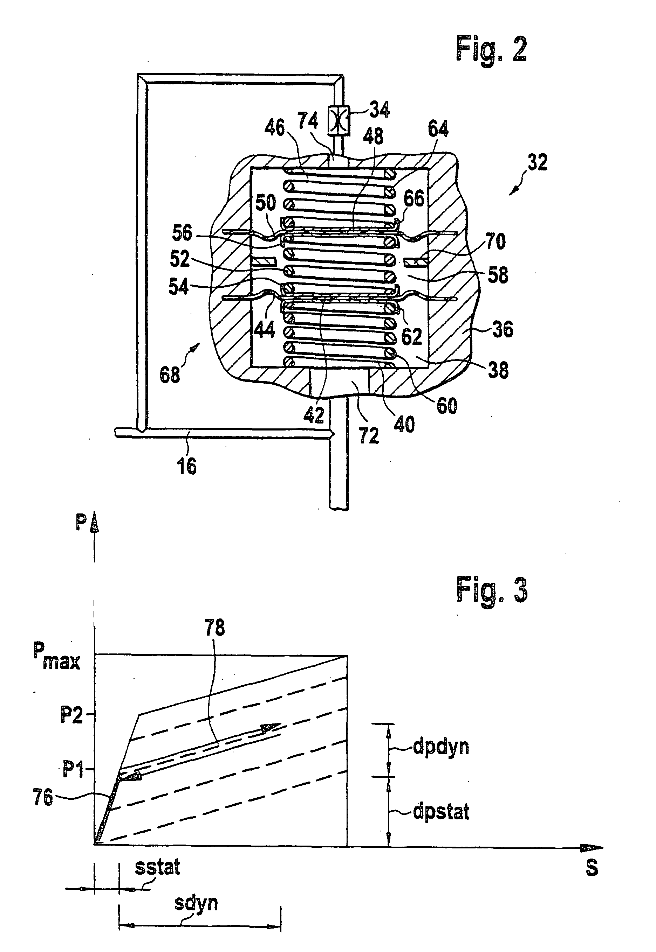

Eine Vorrichtung 32 zum Dämpfen von Druckpulsationen, welche bei dem in Figur 1 dargestellten Kraftstoffsystem 10 zum Einsatz kommt, ist im Detail in Figur 2 dargestellt: Demnach umfasst der Druckdämpfer 32 ein Gehäuse 36, in dem ein zylindrischer Hohlraum 38 vorhanden ist. In diesem Hohlraum 38 ist in Figur 2 unten ein erster Arbeitsraum 40 vorhanden, welcher einerseits von dem Gehäuse 36 und andererseits von einer ersten, elastischen, flexiblen und fluiddichten Membran, deren Ebene senkrecht zur Achse des Hohlraumes 38 ist, begrenzt wird. Die erste Membran trägt in Figur 2 das Bezugszeichen 42 und ist an ihrem äußeren Rand mit einem faltenbalgähnlichen Materialüberschuss 44 versehen. Der radial äußere Rand ist auf in Figur 2 nicht näher dargestellte Art und Weise fluiddicht am Gehäuse 36 festgelegt. Aufgrund des Materialüberschusses 44 und aufgrund der Elastizität der ersten Membran 42 kann sich diese in Längsrichtung des Hohlraums 38 bewegen.

An seinem dem ersten Arbeitsraum 40 entgegengesetzten und in Figur 2 oberen Ende ist in dem Hohlraum 38 ein zweiter Arbeitsraum 46 vorhanden. Dieser wird vom Gehäuse 36 und einer zweiten Membran 48 begrenzt, welche gleich aufgebaut ist wie die erste Membran 42. Auch die zweite Membran 48 weist insoweit einen Materialüberschuss 50 auf und ist am Gehäuse 36 fluiddicht festgelegt. Sie hat auch die gleiche Fläche wie die Membran 42. Zwischen den beiden Membranen 42 und 48 ist eine erste als Schraubenfeder ausgebildete Druckfeder 52 angeordnet. Diese stützt sich an Federtellern 54 bzw. 56 ab, die aus einem steifen Material hergestellt sind und flächig an den jeweiligen Membranen 42 bzw. 48 anliegen. Der Zwischenraum zwischen den beiden Membranen 42 und 48 trägt in Figur 2 das Bezugszeichen 58 und ist durch eine in der Figur nicht dargestellte Diffusionssperre gegenüber der Umgebung abgedichtet.

Eine zweite Schraubenfeder 60 ist zwischen dem Gehäuse 36 und der ersten Membran 42 verspannt. Sie stützt sich einerseits am Gehäuse 36 und andererseits an einem entsprechenden Federteller 62 ab, welcher ebenfalls flächig an der ersten Membran 42 anliegt. Analog hierzu ist im Arbeitsraum 46 eine Schraubenfeder 64 vorhanden, welche zwischen dem Gehäuse 36 und einem ebenfalls flächig an der zweiten Membran 48 anliegenden Federteller 66 verspannt ist. Die beiden Schraubenfedern 60 und 64 bilden eine Halteeinrichtung 68, durch die die beiden Membranen 42 und 48 im Ruhezustand in einer definierten Ausgangslage gehalten werden. Im Zwischenraum 58 ist ein Anschlag 70 vorhanden, welcher den Weg der zweiten Membran 48 in Richtung zur ersten Membran 42 hin begrenzt.
Über Öffnungen 72 und 74 kommunizieren die Arbeitsräume 40 und 46 mit der Niederdruck-Kraftstoffleitung 16.

Der Druckdämpfer 32 arbeitet folgendermaßen (vergl. auch Figur 3): Ist die Niederdruck-Kraftstoffleitung 16 drucklos, befinden sich die beiden Membranen 42 und 48 in den in Figur 2 dargestellten Ausgangslagen. Wird der Druck in der Niederdruck-Kraftstoffleitung 16 erhöht, in dem die elektrische Kraftstoffpumpe 14 mehr Kraftstoff in die Niederdruck-Kraftstoffleitung 16 fördert als von der Hochdruck-Kraftstoffpumpe 18 in die Kraftstoff-Sammelleitung 20 weitergefördert wird, dann wird diese Druckerhöhung über die Öffnungen 72 und 74 in die beiden Arbeitsräume 40 und 46 übertragen.

Da eine derartige Druckänderung in der Niederdruck-Kraftstoffleitung 16 relativ langsam erfolgt, wirkt sich hier das Vorhandensein einer Drossel 34 im Zulauf zum Arbeitsraum 46 nicht aus. In beiden Arbeitsräumen 40 und 46 herrscht also immer der gleiche Druck. Diese Druckerhöhung in den beiden Arbeitsräumen 40 und 46 hat zur Folge, dass die beiden Membranen 42 und 48 aufeinander zu bewegt werden. Hierbei wird die zwischen den beiden Membranen 42 und 48 vorhandene Druckfeder 52 komprimiert.

Der Weg, um den die Druckfeder 52 komprimiert wird, setzt sich also aus der Bewegung der ersten Membran 42 und der zweiten Membran 48 zusammen. Die Schraubenfedern 60 und 64 sind so weich, dass die Bewegung der Membranen 42 und 48 durch die Schraubenfedern 60 und 64 nur in zu vernachlässigender Art und Weise beeinflusst wird. Hieraus ergibt sich für die erste Membran 42 ein Hub sstat, welcher dem halben Kompressionsweg der Druckfeder 52 entspricht. Die entsprechende Druckerhöhung ist in Figur 3 mit dpst at bezeichnet. Der entsprechende Bereich der Kennlinie in Figur 3 trägt das Bezugszeichen 76.

Kommt es nun zu einer Druckpulsation, also einer sehr raschen und somit dynamischen Erhöhung des Drucks in der Niederdruck-Kraftstoffleitung 16 und einer sofort darauf folgenden Druckabsenkung auf den Ausgangsdruck, führt dies über die Öffnung 72 nur zu einer Druckänderung im Arbeitsraum 40. Der Arbeitsraum 46 erfährt aufgrund der im Zulauf vorhandenen Drossel 34 keine derartige Druckerhöhung und anschließende sofortige Druckabsenkung. Aufgrund der Druckerhöhung im ersten Arbeitsraum 40 bewegt sich die erste Membran 42 auf die zweite Membran 48 zu, welche quasi stationär bleibt. Der Weg, um den die Druckfeder 52 bei einer derartigen dynamischen Druckänderung dpdyn komprimiert wird, ergibt sich also ausschließlich aus der Bewegung der ersten Membran 42. Entsprechend ist ein Bereich 78 der Kennlinie, welcher den Hub sdyn der ersten Membran 42 mit der durch die Druckpulsation im ersten Arbeitsraum 40 hervorgerufenen Druckerhöhung dpdyn verknüpft, sehr viel flacher als der Bereich 76 der Kennlinie bei einer statischen Druckänderung dpstat.

Der in Figur 2 dargestellte Druckdämpfer hat also den Vorteil, dass bei einer statischen Druckerhöhung im Arbeitsraum 40 für die erste Membran 42 nur wenig Weg "verschwendet" wird, so dass bei einer dynamischen Druckänderung dpdyn noch ein großer Weg bei einer relativ weichen Kennlinie zur Verfügung steht. Die Glättung von Druckpulsationen in der Niederdruck-Krafstoffleitung 16 ist mit dem Druckdämpfer 32 somit optimal möglich, obwohl der statische Druck in der Niederdruck-Kraftstoffleitung 16 variieren kann.

Wird der Druck in der Niederdruck-Kraftstoffleitung 16 statisch auf einen höheren Druck als den Druck p1 erhöht, bewegen sich die beiden Membranen 42 und 48 weiter aufeinander zu. Dabei kommt die zweite Membran 48 dann, wenn der Druck in den Arbeitsräumen 40 und 46 einen Druck p2 erreicht, in Anlage an den Anschlag 70. Wird der statische Druck in der Niederdruck-Kraftstoffleitung 16 und somit auch in den Arbeitsräumen 40 und 46 auf einen nochmals oberhalb des Drucks p2 liegenden Druck erhöht, bewegt sich nur noch die erste Membran 42, wohingegen die zweite Membran 48 stationär am Anschlag 70 bleibt.

Oberhalb des Drucks p2 wird also die in Figur 3 dargestellte Kennlinie wieder flacher. Sie verläuft dabei parallel zu der im Zusammenhang mit einer dynamischen Druckänderung oben beschriebenen Kennlinie (Bezugszeichen 78). Wird die Niederdruck-Kraftstoffleitung 16 wieder drucklos, beispielsweise wenn die Brennkraftmaschine wieder abgestellt wird, dann federn die Membranen 42 und 48 wieder in die in Figur 2 dargestellte Ausgangslage zurück.

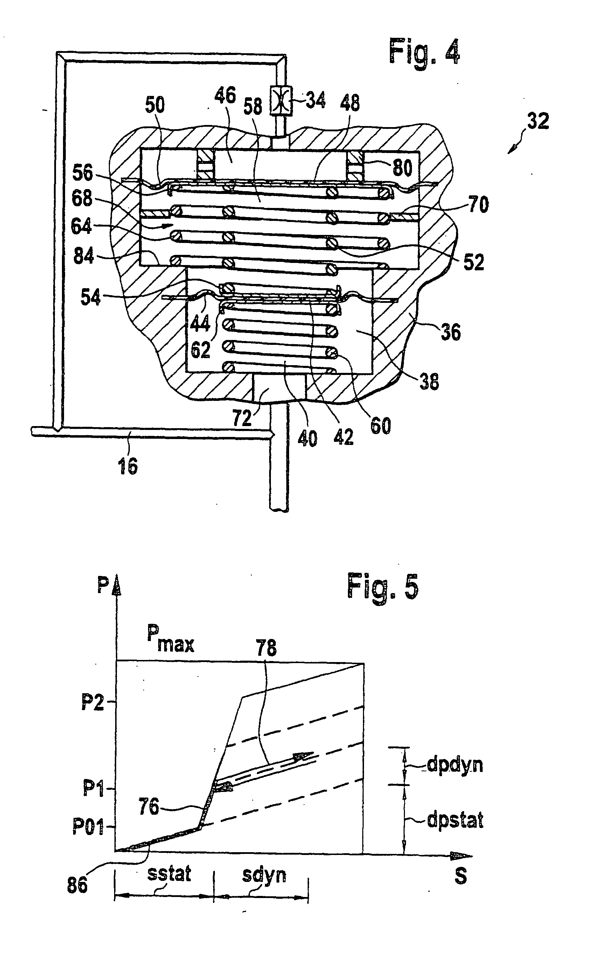

In Figur 4 ist ein erstes erfindungsgemäßes, Ausführungsbeispiel für einen Druckdämpfer 32 dargestellt. Solche Bereiche und Elemente, welche äquivalente Funktionen zu solchen Bereichen und Elementen aufweisen, welche im Zusammenhang mit Figur 2 erläutert wurden, tragen die gleichen Bezugszeichen. Sie sind nicht nochmals im Detail erläutert.

Der in Figur 4 dargestellte Druckdämpfer 32 unterscheidet sich von dem in Figur 2 dargestellten zunächst dadurch, dass für die Membran 48 ein fester Anschlag 80 vorgesehen ist. Über die Schraubenfeder 60 und die Druckfeder 52 wird die Membran dann, wenn die Niederdruck-Kraftstoffleitung 16 und somit auch der Druckraum 40 und der Druckraum 46 drucklos sind, gegen den Anschlag 80 gedrückt. Ein weiterer Unterschied besteht darin, dass die Schraubenfeder 64 sich einerseits an einem Absatz 84 des Gehäuses 36 und andererseits an der zweiten Membran 48 abstützt. Die zweite Membran 48 wird also noch zusätzlich durch die Druckfeder 64 gegen den Anschlag 80 gedrückt. Außerdem ist die Fläche der Membran 48 größer als die der Membran 42.

Im Betrieb des in Figur 4 dargestellten Druckdämpfers 32 bewirkt eine Erhöhung des statischen Drucks in der Niederdruck-Kraftstoffleitung 16 und die entsprechende Druckerhöhung in den Arbeitsräumen 40 und 46 zunächst nur eine Bewegung der ersten Membran 42. Ursache hierfür ist eine entsprechende Auslegung der Vorspannkräfte der Federn 52, 60 und 64 sowie der Verhältnisse der Flächen der Membranen 42 und 48. Entsprechend ergibt sich zunächst bei einer Druckerhöhung der in Figur 5 dargestellte flache Verlauf, welcher dort das Bezugszeichen 86 trägt. Erst ab einem Druck p01 in den Arbeitsräumen 40 und 46 bzw. in der Niederdruck-Kraftstoffleitung 16 hebt die zweite Membran 48 vom Anschlag ab. Entsprechend ergibt sich der in Figur 5 dargestellte steilere Verlauf der Kennlinie, welcher das Bezugszeichen 76 trägt. Der gesamte Hub sstat der ersten Membran 42 ergibt sich nun gemäß einer geknickten Kennlinie mit den Bereichen 86 und 76.

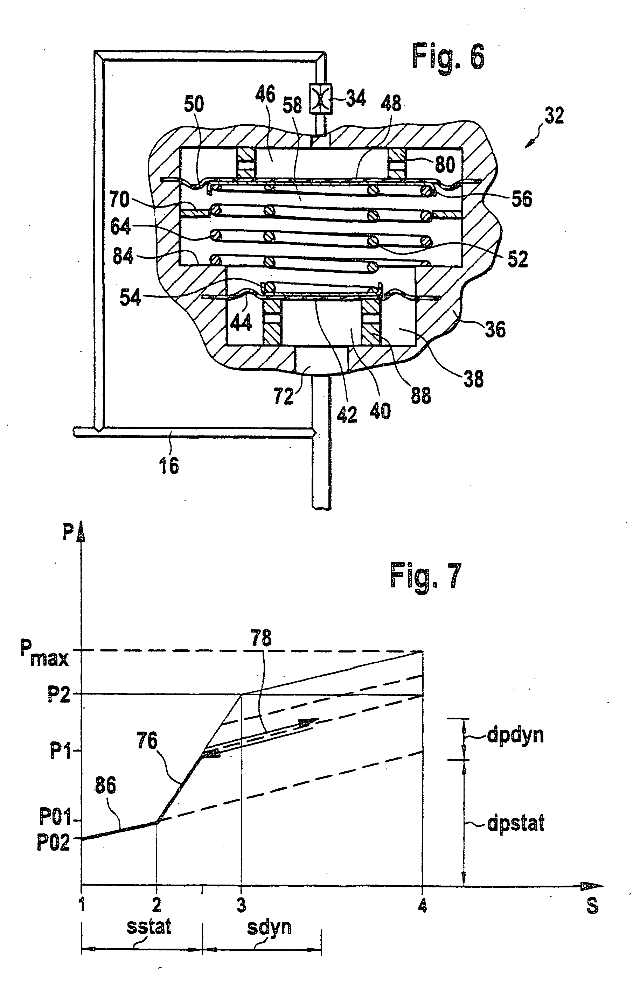

In Figur 6 ist ein zweites erfindungsgemäßes Ausführungsbeispiel eines Druckdämpfers 32 dargestellt. Auch hier tragen solche Bereiche und Elemente, welche äquivalente Funktionen zu solchen Elementen und Bereichen aufweisen, welche im Zusammenhang mit den vorhergehenden Ausführungsbeispielen erläutert worden sind, die gleichen Bezugszeichen.

Bei dem in Figur 6 dargestellten Druckdämpfer 32 stützt sich auch die erste Membran 42 an einem Anschlag 88 ab. Dies führt zu dem in Figur 7 dargestellten Verlauf der Kennlinie. Die Vorspannkräfte der Federn 64 und 52 und die Flächenverhältnisse der Membranen 42 und 48 sind dabei so aufeinander abgestimmt, dass bei einer statischen Druckerhöhung zunächst beide Membranen 42 und 48 von den Druckfedern 52 bzw. 52 und 64 gegen die jeweiligen Anschläge 80 bzw. 88 gedrückt werden. Eine Erhöhung des statischen Drucks bis zum Druck p02 bewirkt also keinen Hub einer der beiden Membranen 42 und 48. Erst bei Überschreiten des statischen Drucks p02 in der Niederdruck-Kraftstoffleitung 16 bzw. den Arbeitsräumen 40 und 46 hebt die Membran 42 vom Anschlag 88 ab. Sie bewegt sich dann längs des mit 86 bezeichneten Bereiches der in Figur 7 dargestellten Kennlinie.

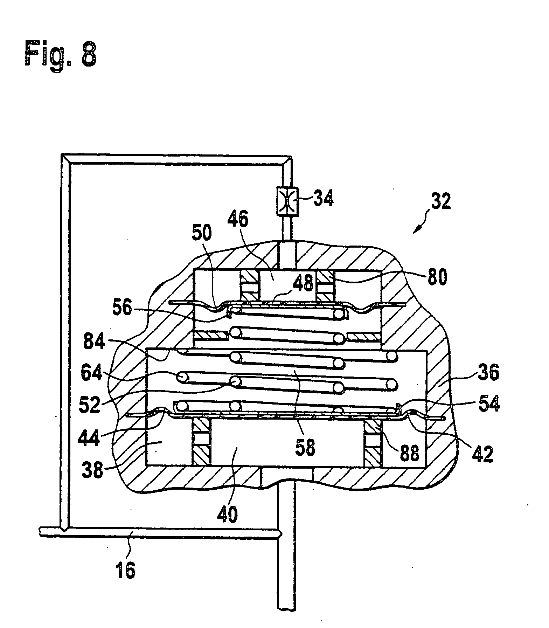

Die gleiche Kennlinie erhält man mit dem in Figur 8 dargestellten dritten erfindungsgemäßen Ausführungsbeispiel eines Druckdämpfers 32. Auch hier gilt im Hinblick auf die Bezugszeichen von funktionsäquivalenten Elementen das oben Gesagte. Bei dem in Figur 8 dargestellten Druckdämpfer ist jedoch die Fläche der Membran 48 kleiner als jene der Membran 42. Ferner wird die zweite Membran 48 nicht, wie bei dem in Figur 6 dargestellten Ausführungsbeispiel, von zwei Federn gegen den Anschlag 80 gedrückt, sondern nur von der Druckfeder 52. Stattdessen wird die erste Membran 42 zusätzlich noch von der Feder 64 im Ruhezustand des Druckdämpfers 32 gegen den Anschlag 88 gedrückt. Der Absatz 84 ist bei dem in Figur 8 dargestellten Ausführungsbeispiel so ausgerichtet, dass sich die Feder 64 entsprechend an ihm abstützen kann.

Der Vorteil des in Figur 6 dargestellten Druckdämpfers 32 gegenüber jenem, welcher in Figur 8 dargestellt ist, liegt darin, dass die erste Membran 42 bei dem in Figur 6 dargestellten Ausführungsbeispiel nur von einer Feder, nämlich der Druckfeder 52, beaufschlagt wird. Da nur die erste Membran 42 zur Glättung von dynamischen Druckpulsationen verwendet wird, weist der in Figur 6 dargestellte Druckdämpfer 32 eine geringere Toleranzempfindlichkeit im dynamischen Betrieb auf.

Es sei an dieser Stelle darauf hingewiesen, dass alle oben gezeigten Druckdämpfer 32 ihre größte Wirkung dann aufweisen, wenn sie unmittelbar vor einem Einlassventil der Hochdruck-Kraftstoffpumpe 18 angeordnet sind. Dies kann beispielsweise dadurch ermöglicht werden, dass der Druckdämpfer 32 in ein Gehäuse der Hochdruck-Kraftstoffpumpe 18 integriert wird. Denkbar ist jedoch auch eine Ausführung, bei der der Druckdämpfer 32 als Modul in das Gehäuse der Hochdruck-Kraftstoffpumpe 18 so nahe wie möglich bei dem besagten Einlassventil eingebaut ist.

## Patentansprüche

1. Vorrichtung (32) zum Dämpfen von Druckpulsationen in einem Fluidsystem, insbesondere in einem Kraftstoffsystem (10, 16) einer Brennkraftmaschine, mit einem Gehäuse (36), mit einem ersten Arbeitsraum (40), welcher mit dem Fluidsystem (16) verbunden ist und bereichsweise von mindestens einem ersten beweglichen Wandelement (42) begrenzt wird, mit einem zweiten Arbeitsraum (46), welcher über mindestens eine Drosseleinrichtung (34) mit dem Fluidsystem (16) verbunden ist und von einem zweiten beweglichen Wandelement (48) begrenzt wird, mit einer ersten Federeinrichtung (52), welche zwischen den beiden Wandelementen (42, 48) angeordnet und mit beiden wirkverbunden ist, **dadurch gekennzeichnet, dass** sie eine Halteeinrichtung (68) umfasst mit mindestens einer zweiten Federeinrichtung (64), welche einerseits mit einem der beweglichen Wandelemente (42; 48) und andererseits mit dem Gehäuse (36) wirkverbunden ist, und mit mindestens einem im zweiten Arbeitsraum (46) gelegenen Anschlag (80), gegen den das zweite Wandelement (48) von mindestens einer der Federeinrichtungen (52; 52, 64) beaufschlagt wird, wobei die Federkonstanten der beiden Federeinrichtungen (52, 64) und die Flächenverhältnisse der beiden Wandelemente (42, 48) so ausgelegt sind, dass bei einer statischen Druckänderung sich zunächst nur das erste Wandelement (42) bewegt.

2. Vorrichtung (32) nach Anspruch 1, **dadurch gekennzeichnet, dass** die Halteeinrichtung (68) mindestens einen Anschlag (88) umfasst, gegen den das erste Wandelement (42) von mindestens einer der Federeinrichtungen (52; 52, 64) beaufschlagt wird.

3. Vorrichtung nach einem der Ansprüche 1 oder 2, **dadurch gekennzeichnet, dass** ein Anschlag (70) vorhanden ist, welcher den Weg des zweiten Wandelements (48) in Richtung zum ersten Wandelement (42) hin begrenzt.

4. Vorrichtung nach einem der vorhergehenden Ansprüche, **dadurch gekennzeichnet, dass** der zwischen den beiden Wandelementen (42, 48) liegende Bereich (58) insbesondere über eine Diffusionssperre flüssigkeitsdicht abgeschlossen oder an eine Leckageleitung, in der eine Drossel angeordnet ist, angeschlossen ist.

5. Kraftstoffsystem (10), mit einer Kraftstoffpumpe (14), welche den Kraftstoff zu einem Druckbereich (16) hin fördert, aus dem der Kraftstoff zu mindestens einer Kraftstoff-Einspritzvorrichtung (22) gelangt, mit einer Einrichtung, durch welche der Druck im Druckbereich (16) verändert werden kann, und mit einer Vorrichtung (32) zum Dämpfen von Druckpulsationen in dem Druckbereich (16), **dadurch gekennzeichnet, dass** die Vorrichtung (32) nach einem der Ansprüche 1 bis 4 ausgebildet ist und wobei der erste Arbeitsraum (40) mit dem Druckbereich (16) verbunden ist.

## Claims

1. Device (32) for damping pressure pulses in a fluid system, particularly in a fuel system (10, 16) of an internal combustion engine, having a housing (36), having a first working space (40) which is connected to the fluid system (16) and is bounded in some regions by at least one first movable wall element (42), having a second working space (46) which is connected to the fluid system (16) via at least one restricting device (34) and is bounded by a second movable wall element (48), and having a first spring device (52) which is arranged between the two wall elements (42, 48) and is operatively connected to both, **characterized in that** it comprises a retaining device (68) having at least one second spring device (64) which is operatively connected, on the one hand, to one of the movable wall elements (42; 48) and, on the other hand, to the housing (36), and having at least one stop (80) which is positioned in the second working space (46) and against which the second wall element (48) is charged by at least one of the spring devices (52; 52, 64), the spring constants of the two spring devices (52, 64) and the surface ratios of the two wall elements (42, 48) being designed in such a manner that, if there is a static change in pressure, first of all only the first wall element (42) moves.

2. Device (32) according to Claim 1, **characterized in that** the retaining device (68) comprises at least one stop (88) against which the first wall element (42) is charged by at least one of the spring devices (52; 52, 64).

3. Device according to either of Claims 1 and 2, **characterized in that** there is a stop (70) which limits the travel of the second wall element (48) in the direction of the first wall element (42).

4. Device according to one of the preceding claims, **characterized in that** the region (58) situated between the two wall elements (42, 48) is closed off in a liquid-tight manner, in particular via a diffusion lock, or is connected to a leakage line in which a restrictor is arranged.

5. Fuel system (10), having a fuel pump (14) which feeds the fuel to a pressure region (16) from which the fuel passes to at least one fuel injection device (22), having a device through which the pressure in the pressure region (16) can be changed, and having a device (32) for damping pressure pulses in the pressure region (16), **characterized in that** the device (32) is designed according to one of Claims 1 to 4, and the first working space (40) being connected to the pressure region (16).

## Revendications

1. Dispositif (32) pour amortir les pulsations de pression dans un système fluidique, notamment dans un système de carburant (10, 16) d'un moteur à combustion interne, comprenant un boîtier (36), un premier espace de travail (40) relié au système fluidique (16) et a une zone limitée par au moins un premier élément de paroi mobile (42), un deuxième espace de travail (46) relié au système fluidique (16) par au moins un système de papillon (34) et limité par un deuxième élément de paroi mobile (48), un premier système de ressort (52) qui est disposé entre les deux éléments de paroi (42, 48) et relié en travail avec ces deux éléments,
**caractérisé en ce qu'**
il comprend un système de maintien (68) comprenant au moins un deuxième système de ressort (64) relié en travail d'une part à un des éléments de paroi (42, 48) mobiles et d'autre part au boîtier (36), et au moins une butée (80) placée dans le deuxième espace de travail (46) contre laquelle est poussé le deuxième élément de paroi (48) par au moins un des systèmes de ressort (52 ; 52, 64), les constantes de rappel des deux systèmes de ressort (52, 64) et les rapports des surfaces des deux éléments de paroi (42, 48) étant définis de telle sorte que seul le premier élément de paroi (42) se déplace lors d'une variation de pression statique.

2. Dispositif (32) selon la revendication 1,
**caractérisé en ce que**
le système de maintien (68) comprend au moins une butée (88) contre laquelle est poussé le premier élément de paroi (42) par au moins un des systèmes de ressort (52 ; 52, 64).

3. Dispositif selon l'une des revendications 1 ou 2,
**caractérisé en ce qu'**
il est prévu une butée (70) qui limite la course du deuxième élément de paroi (48) en direction du premier élément de paroi (42).

4. Dispositif selon l'une quelconque des revendications précédentes,
**caractérisé en ce que**
la zone (58) située entre les deux éléments de paroi (42, 48) est fermée de manière étanche au fluide notamment par une barrière de diffusion ou raccordée à une conduite de fuite dans laquelle est disposé un papillon.

5. Système à carburant (10) comprenant une pompe à carburant (14) qui transporte le carburant vers une zone de pression (16) d'où le carburant est envoyé vers au moins un dispositif d'injection de carburant (22), comprenant un système qui permet de modifier la pression dans la zone de pression (16) et un dispositif (32) pour amortir les pulsations de pression dans la zone de pression (16),
**caractérisé en ce que**
le dispositif (32) est configuré selon l'une des revendications 1 à 4 et le premier espace de travail (40) est relié à la zone de pression (16).
